(19) Europäisches Patentamt
European Patent Office
Office européen des brevets

(11) EP 0 627 078 B1

(12) EUROPÄISCHE PATENTSCHRIFT

(45) Veröffentlichungstag und Bekanntmachung des Hinweises auf die Patenterteilung:
10.10.2001 Patentblatt 2001/41

(21) Anmeldenummer: 94901734.7

(22) Anmeldetag: 07.12.1993

(51) Int Cl.7: G01N 27/419

(86) Internationale Anmeldenummer:
PCT/DE93/01164

(87) Internationale Veröffentlichungsnummer:
WO 94/15206 (07.07.1994 Gazette 1994/15)

(54) **SENSOR ZUR BESTIMMUNG VON GASKOMPONENTEN UND/ODER VON GASKONZENTRATIONEN VON GASGEMISCHEN**

SENSOR FOR THE DETERMINATION OF GASES OR GAS CONCENTRATIONS IN GAS MIXTURES

DETECTEUR PERMETTANT DE DETERMINER DES COMPOSANTS ET/OU DES CONCENTRATIONS DE MELANGES GAZEUX

(84) Benannte Vertragsstaaten:
CH DE FR GB IT LI SE

(30) Priorität: 23.12.1992 DE 4243734
10.04.1993 DE 4311849

(43) Veröffentlichungstag der Anmeldung:
07.12.1994 Patentblatt 1994/49

(73) Patentinhaber: ROBERT BOSCH GMBH
70442 Stuttgart (DE)

(72) Erfinder:
• HOETZEL, Gerhard
D-70372 Stuttgart (DE)
• NEUMANN, Harald
D-71665 Vaihingen/Enzweihingen (DE)
• RIEGEL, Johann
D-74321 Bietigheim-Bissingen (DE)
• FRIESE, Karl-Hermann
D-71229 Leonberg (DE)
• GRUENWALD, Werner
D-70839 Gerlingen (DE)

(56) Entgegenhaltungen:
EP-A- 0 142 992          EP-A- 0 257 842
EP-A- 0 259 175          EP-A- 0 517 364
EP-A- 0 517 366          US-A- 4 927 517

• SENSORS AND ACTUATORS B Bd. B9, Nr. 3 , Oktober 1992 , LAUSANNE CH Seiten 183 - 189 E.M. LOGOTHETIS ET AL 'Chemical and physical sensors based on oxygen pumping with solid-state electrochemical cells'
• SENSORS AND ACTUATORS B Bd. B9 , 1992 , LAUSANNE CH Seiten 233 - 239 J.H. VISSER 'Sensors for measuring combustibles in the absence of oxygen' in der Anmeldung erwähnt

**Beschreibung**

Stand der Technik

Die Erfindung geht aus von einem Sensor zur Bestimmung von Gaskomponenten und/oder von Gaskonzentrationen in Gasgemischen nach der Gattung des Hauptanspruchs.

Aus Sensors und Actuators B 9(1992), 233 - 239, ist ein gattungsgemäßer Sensor zur Bestimmung der CO-Konzentrationen bekannt, bei dem eine Pumpzelle Sauerstoff zu einem Meßelement pumpt. Es wurde dabei festgestellt, daß bei CO in Luft mit 21% $O_2$ der Widerstandswert eines $SnO_2$-Halbleitergassensors mehr als drei Größenordnungen größer ist als bei CO in $N_2$. Das Meßelement ist dabei in einem Meßraum ohne einen definierten Bezug zur Pumpzelle und zum Gasgemisch angeordnet. Es wird lediglich gefordert, daß am Meßelement eine ausreichende Sauerstoffkonzentration vorliegt. Die im Gasgemisch zu messenden Gaskomponenten werden nachfolgend als Schadstoffkomponenten bezeichnet.

Aus der EP 0 519 366 A1 und der EP 0 517 364 A2 ist ein Sensor mit einer Pumpzelle und einer Meßzelle bekannt, wobei die Pumpelektrode der Pumpzelle in Diffusionsrichtung des zu messenden Gasgemisches vor dem Meßelement angeordnet ist, so daß der von der Pumpzelle gepumpte Sauerstoff vor dem Meßelement in das Gasgemisch hineingepumpt wird. Dadurch reagiert der Sauerstoff mit den oxidierbaren Gaskomponenten bereits vor dem Erreichen der Meßzelle. Dadurch bilden sich in der dem Meßelement vorgeschalteten Diffusionsstrecke keine entgegengesetzt gerichteten Konzentrationsgratienten von Gaskomponenten und Sauerstoff aus.

Aus der DE-OS 27 52 520 ist ferner ein Verfahren zur Messung der Summe aller brennbarer Bestandteile in einer Brennstoff-Gesamtatmosphäre bekannt, bei dem eine elektrochemische Meßzelle und eine Pumpzelle vorgesehen sind. Die Meßzelle stellt das Pumppotential auf ein derartiges Niveau ein, daß genügend Sauerstoff in die Innenkammer gepumpt wird, um so eine Verarmung an brennbaren Bestandteilen zu bewirken. Es wird genau soviel Sauerstoff gepumpt, daß an der Meßzelle stets ein stöchiometrisches Gemisch vorliegt. Der Pumpstrom wird dabei als Maß für den Anteil an brennbaren Bestandteile benutzt, wobei durch die Umsetzung die brennbaren Bestandteile an der Pumpelektrode der Pumpstrom proportional der Diffusionsrate der brennbaren Bestandteile durch die Diffusionsöffnung ist. Aufgrund der Querempfindlichkeit gegenüber Sauerstoff gibt die Reaktionsrate an der Pumpelektrode keinen direkten Aufschluß auf die Konzentration der brennbaren Bestandteile im Abgas.

Der Erfindung liegt die Aufgabe zugrunde, einen Sensor zur Bestimmung von Gaskomponenten und/oder Gaskonzentrationen von Gasgemischen zu schaffen, der einen einfachen und kompakten Aufbau besitzt und bei dem die $O_2$-Querempfindlichkeit weitgehend eliminiert wird.

Vorteile der Erfindung

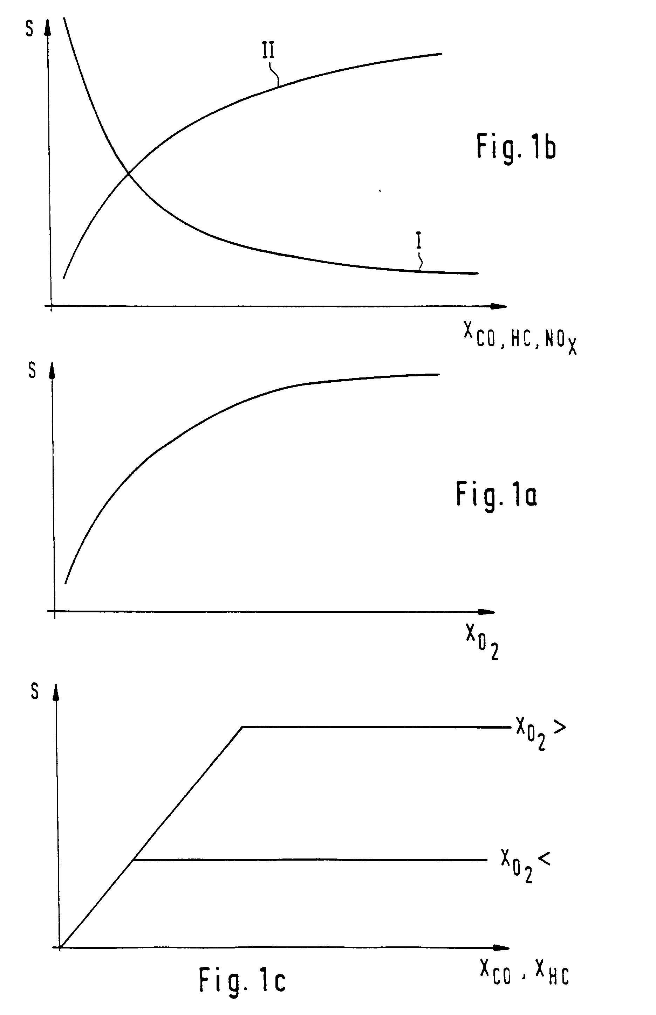

Die Erfindung macht sich die Tatsache zu eigen, daß bei einer Überbelegung der Kornflächen des sensitiven Bereichs des Meßelements mit Sauerstoff selbst hohe Sauerstoffkonzentrationsänderungen vernachlässigbar wenig Einfluß auf das Sensorsignal haben. Diese Abhängigkeit geht beispielsweise aus Figur 1a hervor.

Der erfindungsgemäße Sensor mit den Merkmalen des Hauptanspruchs hat den Vorteil, daß die Bestimmung von Schadstoffkomponenten und/oder von Schadstoffkonzentrationen in Gasgemischen unabhängig vom Sauerstoffpartialdruck bzw. vom Lambdawert des Gasgemisches möglich ist. Die $O_2$-Querempfindlichkeit wird weitgehend eliminiert. Ein weiterer Vorteil besteht darin, daß der Sensor einen einfachen Aufbau besitzt und mit an sich bekannten Meßelementen auskommt. Das Meßelement ist mit einer üblichen Pumpzelle derart konzipiert, daß am Meßelement ständig ein Sauerstoffüberschuß anliegt.

Mit dem erfindungsgemäßen Sensor wird erreicht, daß die Schadstoffkonzentration auf einen Wert eingestellt wird, bei dem das Meßelement eine hohe Empfindlichkeit aufweist. Dies geschieht bei einem Halbleitergassensor und bei einer elektrochemischen Meßzelle dadurch, daß die Schadstoffkonzentration derart eingestellt ist, daß eine Konzentrationsänderung eine maximale Empfindlichkeit liefert. Das ist bei diesen Sensortypen bei niedrigen Schadstoffkonzentrationen der Fall. Figur 1b zeigt diese Abhängigkeit mit dem Verlauf des Sensorsignals S über der Schadstoffkonzentration gemäß Kurve I für CO und HC gemäß Kurve II für $NO_x$. Bei Verwendung eines kalorimetrischen Sensors und eines Ionisationsdetektors ist es zweckmäßig, die geometrischen Verhältnisse (Porösität, Diffusionswiderstände) und die Pumpleistung so abzustimmen, daß die Sauerstoffkonzentration $XO_2$ am Ort des Meßelements den für die maximale Schadstoffkonzentration notwendigen Wert gerade überschreitet, damit das Meßelement ein ausreichend hohes Sensorsignal liefert. Diese geht aus den Figuren 1b und 1c hervor. Figur 1c verdeutlicht, daß das Sensorsignal eines kalorimetrischen Sensors linear mit der Schadstoffkonzentration ansteigt. Demnach ist bei konstantem Sauerstoffpartialdruck das Sensorsignal bei hohen Schadstoffkonzentrationen XCO am größten. Voraussetzung zur Eliminierung der Sauerstoffquerempfindlichkeit ist aber in beiden Fällen, daß die Sauerstoffkonzentration $XO_2$ über dem stöchiometrisch notwendigen Wert der Schadstoffkonzentration liegt.

Durch die in den Unteransprüchen aufgeführten Maßnahmen sind vorteilhafte Weiterbildungen und Verbesserungen des im Hauptanspruch angegebenen Sensors möglich.

Eine erste vorteilhafte Ausführungsform liegt vor, wenn die Pumpzelle und das Meßelement ein integriertes Schichtsystem bilden (integrierter Sensortyp). Bei einer derartigen Ausführungsform ist das Meßelement beispielsweise ein Halbleitergassensor. Dabei kann der gepumpte Sauerstoff über Spillover-Effekte vom $ZrO_2$-Festelektrolyten über das Platin der Elektroden zur halbleitenden Metalloxidschicht, z.B. $SnO_2$, direkt überwechseln, ohne dabei in die Gasphase treten zu müssen. Dadurch ist es möglich, den Oberflächenzustand des Metalloxids (adsorbierter Sauerstoff) über die Pumpzelle direkt zu beeinflussen. Der Oberflächenplatzwechsel erfolgt dabei wesentlich schneller, als eine Diffusion über die Gasphase. Ähnliche Erscheinungen treten bei der Verwendung einer elektrochemischen Meßzelle auf.

Eine weitere vorteilhafte Ausführungsform besteht darin, wenn Pumpzelle und Meßzelle räumlich getrennt sind (diskreter Sensortyp). Diese Anordnung hat den Vorteil, daß die Dimensionierung des Diffusionskanals keinen extrem engen Toleranzen unterliegt. Die Reproduzierbarkeit der Sensorfunktion wird im wesentlichen von der Genauigkeit bestimmt, mit der das Verhältnis Kanallänge/Meßelement-position eingehalten werden kann.

Eine besonders leistungsfähige Pumpzelle wird dadurch geschaffen, daß der an der Sauerstoff-Pumpzelle anliegende Sauerstoff bereits innerhalb des porösen Festelektrolytkörpers an den katalysierenden Pumpelektroden in molekularer Form vorliegt. Um der Pumpelektrode ausreichend Sauerstoff zuzuführen ist es besonders vorteilhaft, den zu pumpenden Sauerstoff über einen Diffusionskanal seitlich dem porösen Festelektrolyt zuzuleiten. Zweckmäßig ist weiterhin den zu pumpenden Sauerstoffs der Pumpzelle zusätzlich durch eine in einer Deckschicht eingebrachten und dem Diffusionsspalt zugeführten Öffnung zuzuleiten, wodurch der Diffusionswiderstand reduziert werden kann.

Ein rationeller Aufbau wird durch einen Laminatverbund von Keramikfolien erreicht, in dem zumindest der zum Betreiben des Sensors notwendige Widerstandsheizer integriert ist, wobei die Verwendung von elektrisch isolierenden $Al_2O_3$-Keramikfolien sich als besonders geeignet herausgestellt hat.

Zeichnung

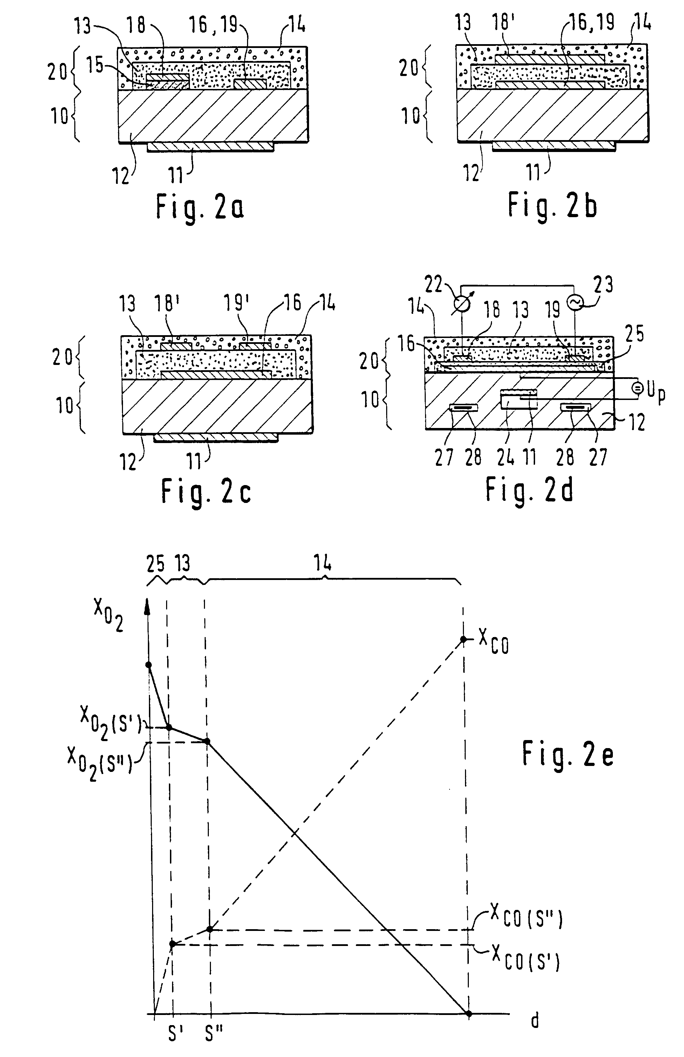

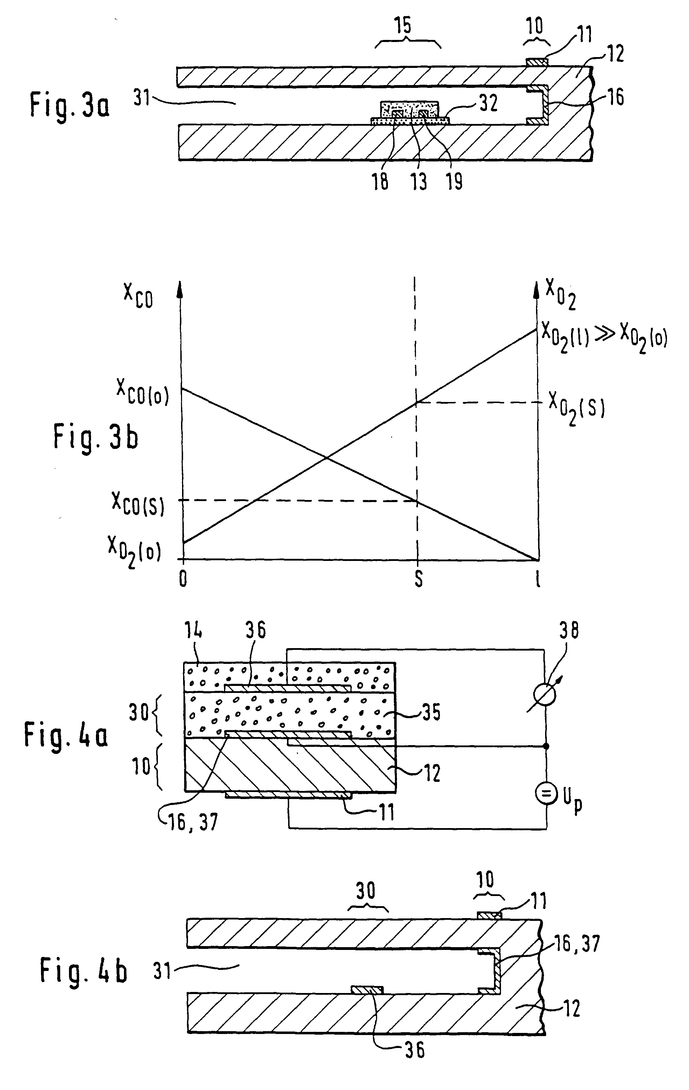

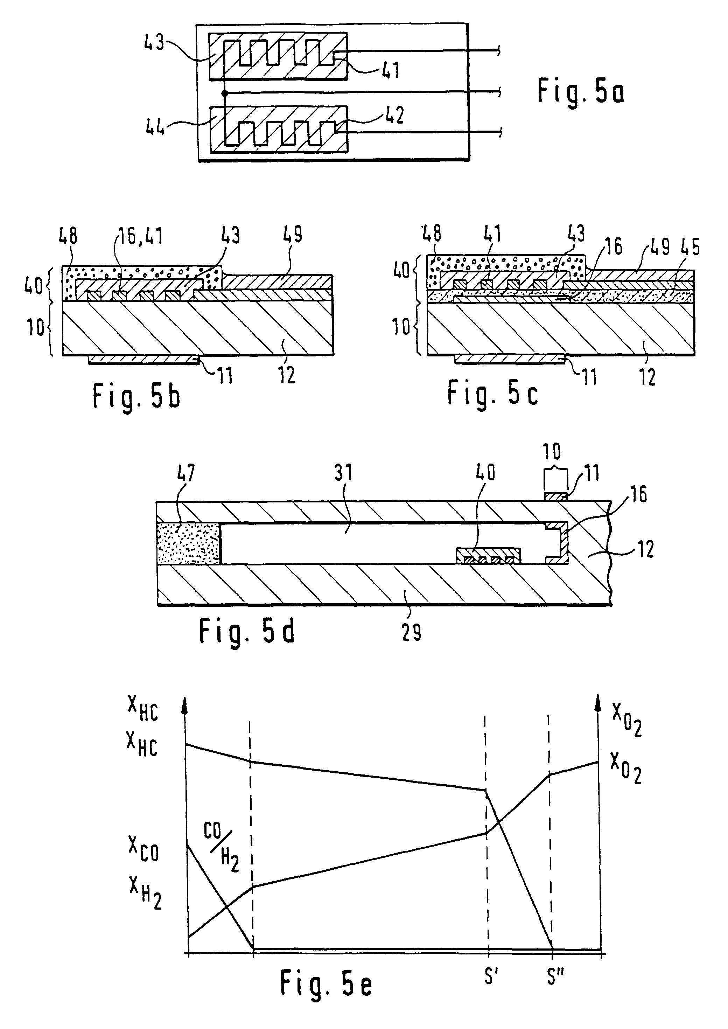

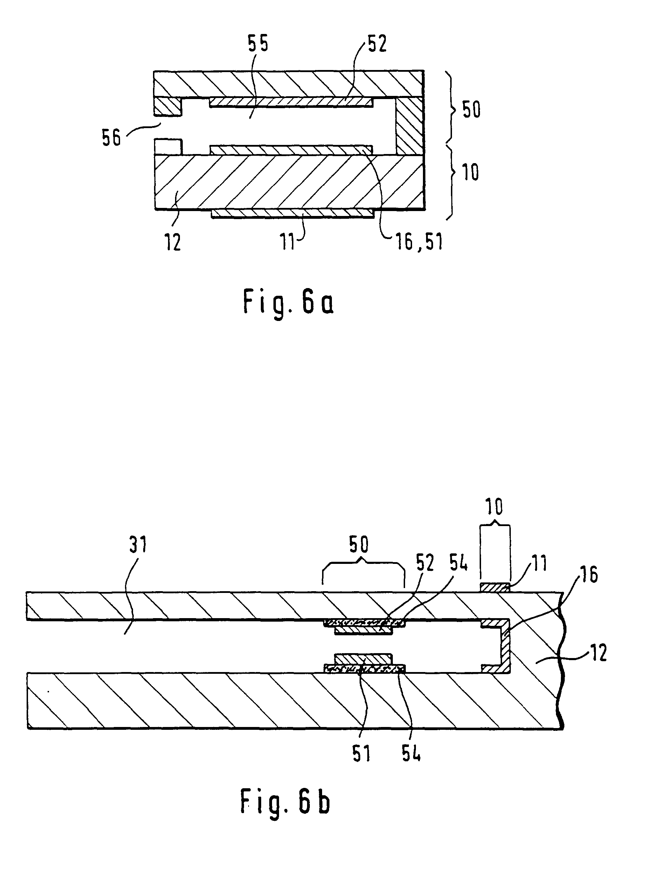

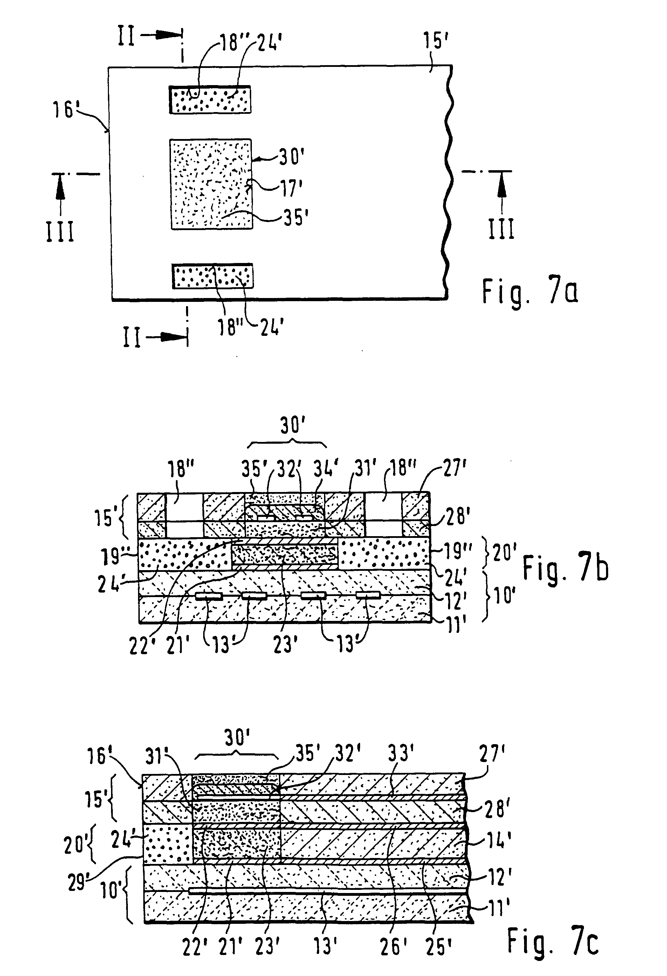

Ausführungsbeispiele der Erfindung sind in der Zeichnung dargestellt und in der nachfolgenden Beschreibung näher erläutert. Es zeigen im einzelnen: Figur 1a den Verlauf des Sensorsignals über der Sauerstoffkonzentration bei konstanter Schadstoffkonzentration, Figur 1b das Sensorsignal über der Schadstoffkonzentration bei konstanter Sauerstoffkonzentration, Figur 1c das Sensorsignal eines kalorimetrischen Sensors in Abhängigkeit von der Sauerstoffkonzentration und der Schadstoffkonzentration, Figur 2a bis 2d Schnittdarstellungen von integrierten Sensoren, mit einer Pumpzelle und einem Halbleitergassensor, Figur 2e einen Verlauf der Sauerstoff- und der CO-Konzentration gemäß dem Sensor in Figur 2d, Figur 3a eine Schnittdarstellung durch einen diskreten Sensor, mit einer Pumpzelle und einem Halbleitergassensor, Figur 3b einen Verlauf der Sauerstoff- und der CO-Konzentration über die Länge des Diffusionsspalts gemäß dem Sensor in Figur 3a, Figur 4a eine Schnittdarstellung durch einen integrierten Sensor, mit einer Pumpzelle und einer elektrochemischen Meßzelle, Figur 4b eine Schnittdarstellung durch einen diskreten Sensor, mit einer Pumpzelle und einer elektrochemischen Meßzelle, Figur 5a eine Draufsicht auf einen kalorimetrischen Gassensor, Figur 5b und Figur 5c jeweils eine Schnittdarstellung eines integrierten Sensors bestehend aus einem kalorimetrischen Gassensor gemäß Figur 5a und einer $O_2$-Pumpzelle, Figur 5d eine Schnittdarstellung durch einen diskreten Sensor, bestehend aus einem kalorimetrischen Gassensor und einer $O_2$-Pumpzelle, Figur 5e den Verlauf der Sauerstoff- und HC-Konzentration über die Länge des Diffusionsspalts gemäß dem Sensor in Figur 5d, Figur 6a eine Schnittdarstellung durch einen integrierten Sensor, bestehend aus einem Ionisatinsdetektor und einer 02-Pumpzelle, Figur 6b eine Schnittdarstellung durch einen diskreten Sensor bestehend aus einem Ionisatinsdetektor und einer $O_2$-Pumpzelle, Figur 7a eine Draufsicht auf einen meßgasseitigen Abschnitt eines Sensors mit Aussparungen für den Zutritt des Meßgases, Figur 7b eine Schnittdarstellung entsprechend den Linien II-II gemäß Figur 7a und Figur 7c eine Schnittdarstellung entsprechend den Linien III-III gemäß Figur 7a.

Beschreibung der Ausführungsbeispiele

Der erfindungsgemäße Sensor kann prinzipell durch zwei Sensortypen ausgeführt werden:

A Sensoren mit unmittelbarer Verbindung von Meßelement und Pumpzelle (integrierter Sensortyp) und
B Sensoren mit räumlicher Trennung von Meßelement und Pumpzelle (diskreter Sensortyp).

Ausführungsbeispiele eines integrierten Sensortyps A sind in den Figuren 2a bis 2c, 4a, 5a, 5b und 6a dargestellt; diskrete Sensortypen B gehen aus den Figuren 3a, 4b, 5d und 6b hervor. Zwischen-formen zwischen dem integrierten und dem diskreten Aufbau sind möglich, beispielsweise gemäß Figur 2d, 5c und 7a.

Eine erste Ausführungsform eines integrierten Sensortyps A zeigt Figur 2a. Der Sensor besteht aus einer Pumpzelle 10 und einem Meßelement 20. Das Meßelement 20 ist hierbei ein Halbleitergassensor mit einer ersten und einer zweiten Meßelektrode 18, 19 und einer porösen halbleitenden Metalloxidschicht 13, die beispielsweise aus $SnO_2$ besteht. Auf einem plättchen- oder folienförmigen Festelektrolytträger 12 aus einem

$O_2$-ionenleitenden Festelektrolyt, beispielsweise aus stabilisiertem Zirkonoxid, ist auf der einen Großfläche eine äußere Pumpelektrode 11 und auf der gegenüberliegenden Großfläche eine innere Pumpelektrode 16 angeordnet. Die beiden Pumpelektroden 11, 16 bestehen beispielsweise aus Platin- oder Platin-Cermet. Neben der inneren Pumpelektrode 16 ist auf derselben Großfläche des Trägers 12 beispielsweise eine $Al_2O_3$-Isolierschicht 15 aufgebracht. Auf der $Al_2O_3$-Isolierschicht 15 befindet sich die Meßelektrode 18. Zur Ausbildung des sensitiven Bereichs ist über die innere Pumpelektrode 16 und die Meßelektrode 18 die Metalloxidschicht 13 gelegt, wobei die innere Pumpelektrode 16 gleichzeitig die zweite Meßelektrode 19 bildet. Zum Schutz gegenüber dem Abgas ist es zweckmäßig, wenn die Metalloxidschicht 13 mit einer porösen Schutzschicht 14 abgedeckt ist, welche zugleich als Diffusionsbarriere wirkt.

Gemäß einer in Figur 2b dargestellten zweiten Ausführungsform eines integrierten Sensors befindet sich auf der der äußeren Pumpelektrode 11 gegenüberliegenden Großfläche lediglich die innere Pumpelektrode 16. Die innere Pumpelektrode 16 wird gleichzeitig als Meßelektrode 19 für das Meßelement 20 genutzt. Eine zweite Meßelektrode 18' ist auf der der inneren Pumpelektrode 16 gegenüberliegenden Seite auf die Metalloxidschicht 13 aufgebracht, über die die Schutzschicht 14 gelegt ist. Hierbei ist die Meßelektrode 18' katalytisch inaktiv, damit die Schadstoffkomponenten nicht bereits an der Meßelektrode 18' oxidiert werden.

Figur 2c zeigt eine dritte Ausführungsform eines integrierten Sensors, mit einer Vier-Elektroden-Struktur. Danach hat die zwischen dem Festelektrolytträger 12 und der Metalloxidschicht 13 positionierte innere Pumpelektrode 16 ausschließlich eine Pumpfunktion. Auf der der inneren Pumpelektrode 16 gegenüberliegenden Seite sind auf der Metalloxidschicht 13 zwei Meßelektroden 18', 19' nebeneinander angeordnet. Die Meßelektroden 18', 19' sind ebenfalls mit der Schutzschicht 14 abgedeckt. Die Meßelektroden 18', 19' sind ebenfalls aus den bereits genannten Gründen katalytisch inaktiv.

Bei den genannten integrierten Sensortypen gemäß den Figuren 2a, 2b und 2c baut sich in der porösen Metalloxidschicht 13 jeweils entgegengesetzt verlaufend ein Sauerstoffgradient und ein Schadstoffgradient auf. Die Sauerstoffkonzentration nimmt von der inneren Pumpelektrode 16 bis zum Gasgemisch an der Schutzschicht 14 ab. Die Schadstoffkonzentration hingegen ist an der Grenzfläche von Schutzschicht 14 und Gasgemisch am größten und fällt zur inneren Pumpelektrode 16 hin ab.

Die Sensoren mit integriertem Aufbau können den direkten Sauerstofftransfer über den Spillover-Effekt, vom $ZrO_2$ des Träger 12 direkt oder über das Platin der Elektrode 16 zur Metalloxidschicht 13 nutzen. Infolgedessen kann ein Oberflächenplatzwechsel wesentlich schneller stattfinden als eine Diffusion des Sauerstoffs über die Gasphase. Bei einer Diffusion über die Gasphase ist zudem zusätzlich ein Desorptionsschritt des Sauerstoffs von der Oberfläche der Platin-Pumpelektrode sowie ein Adsorbtionsschritt des Sauerstoff an der Oberfläche des Metalloxidhalbleiters notwendig.

Eine Ausführungsbeispiel einer Zwischenform zwischen einem integrierten Sensortyp und einem diskreten Sensortyp ist in Figur 2d dargestellt. Anhand dieser Darstellung wird der Sensor mit seinen elektrischen Anschlüssen gezeigt. Außerdem wird der an sich bekannte Aufbau der bei allen Ausführungsbeispielen verwendeten Pumpzelle 10 verdeutlicht. Im Festelektrolyt 12 ist ein Diffusionskanal 24 vorgesehen, in dem die äußere Pumpelektrode 11 angeordnet ist. Zum betreiben der Pumpzelle ist eine Betriebstemperatur von beispiels-weise mindestens 300° C notwendig, dazu ist im Festelektrolyt 12 ein in eine Isolierungen 27 eingebetteter Heizer 28 integriert. Zwischen der inneren Pumpelektrode 16 und der porösen Metalloxidschicht 13 ist ferner eine poröse Isolierschicht 25 aus z.B. $Al_2O_3$ angeordnet. Der von der Pumpzelle 10 zur inneren Pumpelektrode 16 gepumpte Sauerstoff diffundiert hierbei durch die poröse Isolierschicht 25 zur Metalloxidschicht 13.

Den Verlauf der Schadstofkonzentration XCO und der Sauerstoffkonzentration $XO_2$ entlang der Schichtdicke d aus poröser Isolierschicht 25, Metalloxidschicht 13 und Schutzschicht 14 des Halbleitergassensors vom Sensortyp nach Figur 2d zeigt die Figur 2e. Danach liegt die Schadstoffkonzentration XCO(s') und XCO(s'') an den beiden Grenzflächen S' und S'' der Metalloxidschicht 13 weit unter der Sauerstoffkonzentration $XO_2$(s') und $XO_2$(s'') an diesen Stellen. Damit ist der Forderung der Erfindung entsprochen, daß am sensitiven Bereich des Meßelements 20 ein Sauerstoffüberschuß vorliegt.

Die Betriebsart des erfindungsgemäßen Sensors soll am Beispiel des Sensortyps gemäß Figur 2d erläutert werden. Durch Anlegen einer Gleichspannung $U_p$ an die Pumpelektroden 11 und 16 wird Sauerstoff von der äußeren Pumpelektrode 11 zur inneren Pumpelektrode 16 gepumpt. Der zu pumpende Sauerstoff kann dabei entweder einem sich auf der äußeren Pumpelektrodenseite 11 der Pumpzelle 10 befindlichen Referenzgas aus dem Diffusionskanal 24 entnommen werden, oder der Sensor taucht insgesamt in das Meßgas ein, um molekularen Sauerstoff oder Sauerstoff aus sauerstoffhaltigen Verbindungen aus dem Abgas über die äußere Pumpelektrode 11 abzupumpen. Weiterhin sind eine Meßspannungsquelle 23 und ein Amperemeter 22 vorgesehen. Das Amperemeter 22 dient beispielsweise zur Aufnahme des Sensorsignals.

Gemäß einer ersten Betriebsart wird die Pumpspannung $U_p$ der Pumpzelle 10 über bekannte Regelungsschaltungen, wie sie z.B. in der SAE-Veröffentlichung 86 04 08 und in Sensors und Aktuators, 9 (1986), Seite 287 bis 300, beschrieben sind, an der inneren Pumpelektrode 16 der Pumpzelle 10 auf einen konstanten Sauerstoffpartialdruck geregelt. Der Sauerstoffpartialdruck wird dabei gemäß der Erfindung auf Überschuß gegenüber dem zu messenden Partialdruck der Schadstoffkomponenten eingestellt. Beispielsweise wird der Sauerstoffpartialdruck zwischen 2 und 10 % des Gesamtdrucks des Meßgases gewählt. Der konstante Sauerstoffpartialdruck entspricht auch dem Sauerstoffpartialdruck an der Dreiphasengrenze von innerer Pumpelektrode 16 und Gasraum, falls ein katalytisch inaktives Elektrodenmaterial verwendet wird. Wird eine katalytisch aktive Elektrode, insbesondere aus Platin verwendet, die ein Gleichgewicht einstellt, so reagiert das durch Porendiffusion an die Dreiphasengrenze der Elektrode und der Pumpzelle gelangende reduzierende Gas mit dem Sauerstoff. Durch die Metalloxidschicht 13 hindurch stellt sich vom Abgas zur Pumpelektrode 16 hin ein Schadstoffgradient ein, der von der Konzentration der reduzierenden Schadstoffkomponente im Abgas abhängt, und der integral über die Schichtdicke der Metalloxidschicht 13 die Leitfähigkeit dieser Schicht bestimmt.

Gemäß einer weiteren Betriebsart wird mittels eines konstanten Pumpstroms $I_p$ ein konstanter Sauerstoff-Ionenstrom zur Dreiphasengrenze gepumpt durch den sich ebenfalls gemäß der Erfindung ein Sauerstoffüberschuß am Meßelement 20 einstellt. Durch die poröse Metalloxidschicht 13 diffundiert molekularer Sauerstoff in das Abgas. An der Dreiphasengrenze der Pumpelektrode 16 stellt sich ein Sauerstoffpartialdruck ein, der vom Pumpstrom, dem Sauerstoffpartialdruck und den Partialdrücken der Schadstoffe im Gasgemisch bestimmt wird.

Ein Ausführungsbeispiel eines diskreten Sensortyps ist in Figur 3a dargestellt. In einem plättchen- oder folienförmigen Festelektrolytträger 12 wird auf bekannte Weise, z.B. durch Aufdrucken eines sich bei erhöhter Temperatur rückstandlos zersetzenden Stoffes, wie Ruß oder Theobromin, ein Diffusionsspalt 31 erzeugt. Am geschlossenen Ende des Diffusionsspaltes 31 ist die innere Pumpelektrode 16 angeordnet, die möglichst eine große aktive Fläche aufweisen soll und daher die gesamte Höhe des Diffusionsspaltes 31 einnimmt und zusätzlich in Längsrichtung des Diffusionsspaltes 31 an der Ober- und Unterseite verlängert ist. Auf der oberen Großfläche des Fest-elektrolytträgers 12 ist der inneren Pumpelektrode 16 gegenüberliegend die äußere Pumpelektrode 11 angeordnet.

In einer Entfernung s vom Eingang des Diffusionsspalts 31 ist das Meßelement 20, beispielsweise ein Halbleitergassensor 15 positioniert. Dazu ist auf der unteren Fläche des Diffusionsspaltes 31 eine Isolierschicht 32, beispielsweise aus $Al_2O_3$ aufgebracht, auf der die beiden Meßelektroden 18 und 19 und die Metalloxidschicht 13 angeordnet sind.

Im Sensorbetrieb wird an die Elektroden 11 und 16 der Pumpzelle 10 eine Pumpspannung $U_p$ angelegt, daß sich ein definierter, genügend hoher Sauerstoffpartialdruck einstellt, von beispielsweise 10 % des Gesamtdruckes am geschlossenen Ende des Diffusionsspalts 31. Gegenüber diesem Sauerstoffpartialdruck ist der Sauerstoffpartialdruck im Gasgemisch an der Öffnung des Diffusionsspalts 31 vernachlässigbar klein. Der Verlauf der Sauerstoffkonzentration $XO_2$ und der Schadstoffkonzentration XCO über die Länge 1 des Diffusionsspalts 31 geht aus Figur 3b hervor. Der Sauerstoffgradient $XO_2$ und der Schadstoffgradient XCO sind entgegengesetzt gerichtet. An der Stelle s im Diffusionsspalt 31, an der der Halbleitergassensor 15 angeordnet ist, ist $XO_2(s) \gg XCO(s)$.

Für den Partialdruck der reduzierenden Komponente, z.B. CO, am Ort s des Halbleitergassensors 15 bei linearen Verhältnissen gilt:

$$pCO\ (s) = (1 - s/l)\ pCO$$

Damit ist gewährleistet, daß der Halbleitergassensor 15 immer einem näherungsweise konstanten Sauerstoffpartialdruck ausgesetzt ist. Aus dem Partialdruck der reduzierenden Komponente, z.B. CO am Ort des Sensors kann auf dem Partialdruck der reduzierenden Komponente im Gasgemisch rückgerechnet werden.

Diskrete Sensortypen (B) haben insbesondere den Vorteil, daß keine extrem engen Toleranzen bei der Dimensionierung des Diffusionsspalts 31 beachtet werden müssen. Die Dimensionierung des Diffusionsspalts 31 muß lediglich so an die Pumpleistung der Pumpzelle 10 angepaßt werden, daß am geschlossenen Spaltende die Parameter Sauerstoffpartialdruck gleich 2 bis 10 % und Partialdruck der reduzierenden Schadstoffkomponente, z.B. CO, gleich 0 eingestellt werden können.

Einen integrierten Sensor, bei dem das Meßelement 20 eine elektrochemische Meßzelle 30 ist, geht aus Figur 4a hervor. Die Pumpzelle 10 besitzt, wie bei den beschriebenen Halbleitergassensoren, eine innere und eine äußere Pumpelektrode 11, 16. Auf der inneren Pumpelektrode 16 ist eine weitere Festelektrolytschicht 35 angeordnet, auf der der inneren Pumpelektrode 16 gegenüberliegend eine Meß-elektrode 36 aufgebracht ist. Die Festelektrolytschicht 35 ist porös ausgeführt. Die Meßelektrode 36 ist katalytisch nicht aktiv. Nur bei katalytisch schwach oder nicht aktiver Meßelektrode wird ein "Misch-potential" gemessen, welches auch von den Schadstoffkomponenten abhängt. Auch bei diesem Sensor ist die Meßelektrode 36 mit einer porösen Schutzschicht 14 abgedeckt. Zur Ausbildung der Meßzelle 30 wird die innere Pumpelektrode 16 zugleich als Referenzelektrode 37 geschaltet.

Der Schadstoff- und der Sauerstoffgradient verläuft jeweils entgegengesetzt gerichtet in der porösen Festelektrolytschicht 35, wobei an der Referenzelektrode 37 ein Sauerstoffüberschuß einzustellen ist. Der Sauerstoffüberschuß an der inneren Pumpelektrode 16 und damit an der Referenzelektrode 37 bildet eine entsprechende Potentialdifferenz zwischen Referenzelektrode 37 und Meßelektrode 36 aus. Die weiterhin vorgesehene Pumpspannungsquelle $U_P$, hat bei diesem Ausführungsbeispiel die gleiche Funktion wie in Figur 2d. Mit einem Spannungsmeßgerät 38 wird die Potentialdifferenz als Sensorsignal aufgenommen.

Eine Ausführungsform eines diskreten Sensors mit einer elektrochemischen Meßzelle 30 ist in Figur 4b dargestellt. Dieser Sensor ist ähnlich dem Sensor in Figur 3a aufgebaut, nur daß anstelle des Halbleitergassensors eine elektrochemische Meßzelle 30 vorgesehen ist. Die Meßzelle 30 besteht aus der im Diffusionsspalt 31 angeordneten Meßelektrode 35 und der von der inneren Pumpelektrode 16 gebildeten Referenzelektrode 37. Der weitere Aufbau und die Funktion entspricht der Ausführungsform in Figur 3a.

Ein weiteres Ausführungsbeispiels eines integrierten Sensors zeigen die Figuren 5a und 5b, bei denen als Meßelement ein kalorimetrischer Gassensor 40 (Wärmetönungssensor, Pellistor) verwendet wird. Dazu ist auf dem Festelektrolytträger 12 der Pumpzelle 10 eine erste und eine zweite Mäander-Widerstandsbahn 41 und 42 aufgebracht, die jeweils beispielsweise aus Platin- oder Platin-Cermet bestehen. Auf der ersten Widerstandsbahn 41 ist eine poröse katalytisch aktive, elektrisch nicht leitende Schicht 43 und auf der zweiten Widerstandsbahn 42 eine katalytisch inaktive, elektrisch nicht leitende Schicht 44 angeordnet (Figur 5b).

Die katalytisch inaktive Schicht 44 ist vorteilhafterweise gasdicht, um eine katalytische Reaktion an der Widerstandsbahn 42 weitgehend zu vermeiden. Die katalytisch aktive Schicht 43 ist zweckmäßiger-weise mit einer porösen Schutzschicht 48 versehen, die ebenso als Diffusionsbarriere wirkt. Vorteilhafterweise ist im Bereich der Widerstandsbahnzuleitungen eine gasdichte, isolierende oder gegen die Leiterbahnen isolierte Abdeckschicht 49 aufgebracht, die Reaktionen an an der Zuleitung verhindert. An der katalytisch aktiven Schicht 43 reagieren oxidierbare Gase mit dem Luftsauerstoff unter Freisetzung von Wärme, wobei die Wärmetönung entweder nicht-isotherm über die Temperaturerhöhung des Sensors oder isotherm über die Verlustleistungsänderung des Sensors (Regelung auf konstante Sensortemperatur) gemessen wird. Die Wärmetönung ist bei $O_2$-Über-schuß nur von der Gaskonzentration der oxidierbaren Gase abhängig, jedoch nicht von der $O_2$-Konzentration. Dazu ist es erforderlich, einen genügend hohen $O_2$-Überschuß mittels der Pumpzelle 10 in die katalytisch aktive Schicht 43 einzubringen.

Eine Mischform zwischen integriertem Sensortyp A und diskretem Sensortyp B mit seinem kalorimetrischen Sensor 40 geht aus Figur 5c hervor. Hierbei ist die Pumpzelle 10 mit einer separaten inneren Pumpelektrode 16 ausgeführt, über die eine poröse Isolierschicht 45 gelegt ist. Auf die poröse Isolierschicht 45 ist mindestens die Widerstandsbahn 41 und die katalytisch aktive Schicht 43 aufgebracht. Der Sensor dieser Ausführungsform arbeitet nach dem gleichen Prinzip wie der in Figur 5b dargestellte Sensor. Der Sauerstoff- und der Schadstoffgradient verläuft jeweils durch die poröse katalytisch aktive Schicht 43 und die poröse Isolierschicht 45. Über der katalytisch aktiven Schicht kann die poröse Schutzschicht 48 aufgebracht sein. Die Widerstandsbahnzuleitung ist ebenfalls vorteilhafterweise mit der gasdichten Abdeckschicht 49 versehen.

Einen diskreten Aufbau besitzt der Sensor gemäß Figur 5d, bei dem ähnlich der Ausführungsform in Figur 3a in einem Abstand s', s'' der kalorimetrische Gassensor 40 im Diffusionsspalt 31 angeordnet ist. Der Diffusionsspalt 31 ist am Eingang beispielsweise mit einem porösen Oxidationskatalysator 47 verschlossen. Der Oxidationskatalysator 47 dient dazu, eine Selektivität gegenüber HC zu erreichen, wobei die im Abgas befindlichen brennbaren Gaskomponenten $NO_x$, $H_2$ und/oder CO über eine Vorverbrennung bei einer niedrigen Temperatur von beispielsweise 300° C verbrannt werden. Am kalorimetrischen Meßelement 40 verbrennt somit nur noch HC bei einer höheren Temperatur von beispielsweise 500 - 600° C.

Der Verlauf des Sauerstoffgradienten und des HC-Gradienten innerhalb des Diffusionsspalts 31 geht aus Figur 5e hervor. Bei genügend hohem Sauerstoffpartialdruck ist somit gewährleistet, daß am kalorimetrischen Gassensor 40 die Sauerstoffkonzentration über der zu messenden HC-Konzentration liegt.

Die in den Figuren 6a und 6b dargestellten Ausführungsformen des Sensors nutzen als Meßelement 20 einen Ionisationsdetektor 50. Dabei zeigt Figur 6a eine integrierte Ausführungsform, bei der auf dem Festelektrolytträger 12 die beiden Pumpelektroden 11 und 16 angeordnet sind, wobei die innere Pumpelektrode 16 zugleich eine Anode 51 des Ionisationsdetektors 50 bildet. Der Anode 51 liegt eine Kathode 52 gegenüber. Zwischen Anode 51 und Kathode 52 ist ein Gasraum 55 ausgebildet, dem über eine Meßgasöffnung 56 das Gasgemisch zugeleitet wird. Bei Temperaturen von beispielsweise 800° C werden an der katalytisch aktiven Anode 51 bei der Verbrennung HC-Ionen gebildet, die von der gegenüberliegenden Kathode 52 abgesaugt werden. Der für die Verbrennung im Abgas notwendige Sauerstoff wird, wie bei den anderen Ausführungsbeispielen, durch die Pumpzelle 10 direkt zur Anode 51 gepumpt.

Eine diskrete Ausführungsform mit einem Ionisationsdetektor zeigt Figur 6b, wobei hier der Festelektrolytträger 12, wie bei den vorher beschriebenen diskreten Sensortypen, den Diffusionsspalt 31 aufweist. Im Diffusionsspalt 31 ist in einem Abstand von dessen Öffung der Ionisationsdetektor 50 angeordnet. Dabei ist jeweils gegenüberliegend auf der Oberseite und der Unterseite des Diffusionsspaltes 31 eine Isolierschicht 54 aufgebracht, auf denen jeweils die Anode 51 und die Kathode 52 angeordnet sind. Da bei der Verbrennungsreaktion von HC an der Anode 51 vergleichbare Verhältnisse vorliegen wie beim kalorimetrischen Sensor, gelten bei den Überlegungen bezüglich der Konzentrationsverteilung der Gase, einschließlich des Sauerstoffs die bereits in diesem Zusammenhang ausgeführten Erläuterungen.

Figur 7a zeigt eine Draufsicht auf einen meßgasseitigen Abschnitt einer Deckfolie 15 eines Sensors. Der Sensor gemäß Figur 7b und c besitzt einen Keramikträger 10', eine elektrochemische Sauerstoff-Pumpzelle 20' und ein Meßelement 30'. Der Keramikträger 10', besitzt eine erste Keramikfolie 11' aus $Al_2O_3$ und eine zweite Keramikfolie 12' ebenfalls aus $Al_2O_3$, zwischen denen ein Wider-standsheizer 13' eingebettet ist. Auf der Großfläche der zweiten Keramikfolie 12' eine äußere Pumpelektrode 21' angeordnet, auf der ein poröser sauerstoffionenleitender Festelektrolyt 23' aus beispielsweise $Yb_2O_3$- oder $Y_2O_3$-stabilisiertem Zirkoniumoxid aufgebracht ist. Der poröse Festelektrolyt 23' ist zwecks Anpassung der thermischen Ausdehnungskoeffizienten vorteilhaft als Mischkeramik aus stabilisiertem $ZrO_2$ und $Al_2O_3$, vorzugsweise in einem Verhältnis von 1:1 ausgeführt.

Die äußere Pumpelektrode 21' ist mit einer auf der zweiten Keramikfolie 12' geführten Leiterbahn 25' verbunden. Auf die zweite Keramikfolie 12' und über die Leiterbahn 25' ist bis zum Festelektrolyt 23' eine elektrisch isolierende Zwischenschicht 14' gelegt, welche zweckmäßigerweise die Stärke des Festelektrolyten 23' aufweist und aus $Al_2O_3$ besteht. Auf dem Festelektrolyt 23' ist der äußeren Pumpenelektrode 21' gegenüberliegend eine innere Pumpenelektrode 22' angeordnet. Die innere Pumpenelektrode 22' ist mit einer auf der Zwischenschicht 14' angeordneten weiteren Leiterbahn 26' verbunden. Die Pumpenelektroden 21', 22' sind Cermet-Elektroden, vorzugsweise mit einem vollstabilisierten $ZrO_2$-Stützgerüst.

Über der Pumpzelle 20' befindet sich die Abdeckfolie 15', welche sich aus einer ersten Isolationsschicht 27' und einer zweiten Isolationsschicht 28' zusammensetzt. Beide Isolationsschichten 27', 28' bestehen beispielsweise aus $Al_2O_3$. In der Abdeckschicht 15' ist gemäß Figur 7a eine Aussparung 17' und seitlich daneben jeweils eine Öffnung 18'' vorgesehen. Die Aussparung 17' ist so angeordnet, daß sie über der Pumpzelle 20' liegt und bis auf die innere Pumpelektrode 22' reicht.

In der Aussparung 17' ist das Meßelement 30' angeordnet. Als Meß-element 30' wird im vorliegenden Beispiel ein Halbleitergassensor verwendet. Dazu ist in der Aussparung 17' auf die innere Pumpelektrode 22' eine poröse Isolationsschicht 31', beispielsweise aus $Al_2O_3$ aufgebracht. Auf der porösen Isolationsschicht 31' befinden sich zwei nebeneinander angeordneten Meßelektroden 32', beispielsweise aus Platin. Die beiden Meßelektroden 32' verfügen jeweils über eine Meßelektrodenleiterbahn 33', welche zwischen den beiden Isolationsschichten 27' und 28' geführt werden. Über die beiden Meßelektroden 32' ist eine halbleitende Metalloxidschicht 34' gelegt, welche beispielsweise aus $SnO_2$ besteht. Die Metalloxidschicht 34' ist mit einer porösen Schutzschicht 35' abgedeckt, welche zweckmäßigerweise bündig mit der Oberfläche der zweiten Isolationsschicht 28' abschließt.

Die beiden neben der Aussparung 17' angeordneten Öffnungen 18'' führen zu jeweils einem der Pumpzelle 20 seitlich zugeführten Kanal 19''. Die beiden Kanäle 19'' sind zum Schutz der Pumpzelle 20' zweckmäßigerweise mit einem porösen Diffusionskörper 24', beispielsweise aus $ZrO_2$ gefüllt. Es ist gleichfalls denkbar, die Öffnungen 18'' ebenfalls mit einem derartigen porösen Diffusionskörper zu versehen. Die Pumpzelle 20' ist von der schmalen Frontseite 16' des Sensors zurückversetzt, so daß sich zur Frontseite 16' hin zusätzlich ein frontseitiger Kanal 29' zur Pumpzelle 20' hin ausbildet, welcher ebenfalls mit dem Diffusionskörper 24' ausgefüllt ist. Es ist andererseits aber auch denkbar, die Kanäle 19'' und 29' ohne Verfüllung auszuführen.

Zum Betreiben des Sensors wird eine Pumpspannung an die Pumpelektroden 21', 22' angelegt und über eine bekannte Regelungsschaltung, wie sie zum Beispiel in der SAE-Veröffentlichung 86 04 08 beschrieben ist, ein konstanter Sauerstoffpartialdruck an der inneren Pumpelektrode 22' eingestellt, so daß sich gemäß der Erfindung der Sauerstoff im Überschuß gegenüber den zu messenden Gaskomponenten befindet. Beispielsweise wird der Sauerstoffpartialdruck zwischen 2 und 10% des Gesamtdrucks des Meßgases gewählt. Der konstante Sauerstoffpartialdruck entspricht auch dem am Meßelement 30' anliegenden Sauerstoffpartialdruck.

Zum Betreiben des Sensors kann entweder die Pumpzelle 20' und das Meßelement 30' in das Meßgas eingetaucht werden. Hierbei pumpt die Pumpzelle 20' molekularen Sauerstoff oder Sauerstoff aus sauerstoffhaltigen Verbindungen aus dem Meßgas über die äußere Pumpelektrode 21' ab. Es ist aber genauso denkbar, nur das Meßelement 30' mit dem Meßgas in Berührung zu bringen und die Pumzelle 20' mit den Kanälen 19', 29' und den Öffnungen 18' einem Referenzgas auszusetzen, aus dem der Sauerstoff abgepumpt wird.

Die beschriebenen Sensortypen sind vorzugsweise in Dickschichttechnik ausgeführt. Die dazu üblich eingesetzte Siebdrucktechnologie ist hinlänglich bekannt. Außerdem sind die beschriebenen Sensortypen zweckmäßigerweise mit dem in Zusammenhang mit der Ausführungsform in Figur 2d beschriebenen integrierten Heizer ausgeführt auf dessen Darstellung im Einzelnen verzichtet wurde. Es ist ferner denkbar, andere Materialien für den Schichtaufbau einzusetzen. Beispielsweise kann das Schichtsystem auf ein keramisches Substrat aufgebaut werden.

Es ist aber genauso denkbar, einzelne Schichten als Folien auszuführen, so daß der Sensor insgesamt als Laminatverbund aufgebaut ist.

**Patentansprüche**

1. Sensor zur Bestimmung von Gaskomponenten und/oder Gaskonzentrationen in Gasgemischen, insbesondere von CO, $NO_x$ und HC in Abgasen von Verbrennungsmotoren, mit einem einen sensitiven Bereich aufweisenden Meßelement, mit einer Pumpzelle mit auf einem Festelektrolyten angeordneten Pumpelektroden, die unter Ausnutzung der Sauerstoffionenleitung des Festelektrolyten einen Sauerstofftransfer zum Meßelement bewirken, sowie mit einer Diffusionsstrecke für das Gasgemisch und den von der Pumpzelle gepumpten Sauerstoff, wobei über die Diffusionsstrecke das Gasgemisch und der gepumpte Sauerstoff zum sensitiven Bereich der Meßzelle geleitet wird, **dadurch gekennzeichnet, daß** die Pumpzelle (10, 20') und das Meßelement (20, 30, 30', 40, 50) getrennt voneinander angeordnet und über die Diffusionsstrecke miteinander verbunden sind, daß die Diffusionsstrecke mit einer Öffnung dem Gasgemisch ausgesetzt ist, daß zumindest eine der Pumpelektroden (16) entgegengesetzt zur Öffnung in Diffusionsrichtung der zu bestimmenden Gaskomponenten hinter dem sensitiven Bereich des Meßelements (20, 30, 30', 40, 50) derart innerhalb der Diffusionsstrecke angeordnet ist, daß sich in der Diffusionsstrecke gegeneinander gerichtet verlaufend ein Konzentrationsgradient der zu bestimmenden Gaskomponente und ein Konzentrationsgradient des von der Pumpzelle (10, 20') gepumpten Sauerstoffs ausbilden, und daß das Meßelements (20, 30, 30', 40, 50) in der Diffusionsstrecke bezüglich der Konzentrationsgratienten derart angeordnet ist, daß am sensitiven Bereich ein Sauerstoffüberschuß vorliegt und sich das Meßelement (20, 30, 30', 40, 50) im Bereich hoher Empfindlichkeit in Bezug auf die zu bestimmende Gaskomponente befindet.

2. Sensor nach Anspruch 1, **dadurch gekennzeichnet, daß** die Gaskonzentration derart eingestellt ist, daß eine Gaskonzentrationsänderung eine Sensorsignaländerung liefert, welche wesentlich größer ist, als die durch die Sauerstoffkonzentrationsänderung hervorgerufene Sensorsignaländerung.

3. Sensor nach Anspruch 1, **dadurch gekennzeichnet, daß** die am sensitiven Bereich maximal auftretende Konzentration der zu bestimmenden Gaskomponente annähernd auf den stöchiometrischen Wert bezüglich der Sauerstoffkonzentration eingestellt ist und diesen jedoch nicht überschreitet, so daß die Konzentration der zu bestimmenden Gaskomponente ein maximales Sensorsignal liefert.

4. Sensor nach Anspruch 1, **dadurch gekennzeichnet, daß** die Pumpzelle (10, 20') eine innere und eine äußere Pumpelektrode (11, 16, 22', 21') aufweist, daß das Meßelement (20, 30') ein mit der Pumpzelle (10, 20') integriertes Schichtsystem bildet, und daß die Diffusions-strecke von mindestens einer poröse Schicht gebildet ist, wobei sich in der porösen Schicht jeweils entgegengesetzt verlaufend der Gradient der zu bestimmenden Gaskomponente und der Sauerstoffgradient aufbaut.

5. Sensor nach Anspruch 4, **dadurch gekennzeichnet, daß** als Meßelement (20) ein Halbleitergassensor aus einer den sensitiven Bereich bildenden porösen halbleitenden Metalloxidschicht (13) vorgesehen ist.

6. Sensor nach Anspruch 4, **dadurch gekennzeichnet, daß** auf der inneren Pumpelektrode (16) eine poröse Isolationsschicht (25) angeordnet ist, welche die Diffusionsstrecke bildet, und daß auf der Isolationsschicht (25) eine halbleitende Metalloxidschicht (13) eines Halbleitergassensors angeordnet ist.

7. Sensor nach Anspruch 4, **dadurch gekennzeichnet, daß** das Meßelement (20) eine elektrochemische Meßzelle (28) mit einem $O^{-2}$-leitenden Festelektrolyt (35) ist, auf dem eine Meßelektrode (36) und eine Referenzelektrode (37) angeordnet sind, wobei der $O^{-2}$-leitende Festelektrolyt (35) porös ausgebildet ist und die Diffusionsstrecke bildet.

8. Sensor nach Anspruch 4, **dadurch gekennzeichnet, daß** das Meßelement (20) ein kalorimetrischer Sensor ist, der auf dem Festelektrolytträger (12) angeordnet ist, daß mindestens zwei Widerstände (41, 42) vorgesehen sind, daß einer der Widerstände (41) in eine katalytisch aktive Schicht (43) eingebettet ist, so daß sich die Temperatur dieses Widerstandes verändert, und daß der andere Widerstand (42) einer katalytisch inaktiven Schicht (44) zugeordnet ist.

9. Sensor nach Anspruch 8, **dadurch gekennzeichnet, daß** die katalytisch aktiven Schicht (43) porös ausgeführt ist und die Diffusionsstrecke bildet.

10. Sensor nach Anspruch 8, **dadurch gekennzeichnet, daß** auf der inneren Pumpelektrode (16) eine poröse Isolierschicht (45) angeordnet ist, welche die Diffusionsstrecke bildet.

11. Sensor nach Anspruch 4, **dadurch gekennzeichnet, daß** das Meßelement (20) ein Ionisationsdetektor (50) mit einer in einer Ionisationskammer (55) angeordneten katalytisch aktiven Anode (51) und einer Kathode (52) ist, wobei bei höheren Temperaturen die Anode (51) positive Ionen bildet, die die Kathode (52) mittels einer Saugspannung absaugt, und daß die Ionisationskammer (55) die Diffusions-

strecke bildet.

**12.** Sensor nach Anspruch 1, **dadurch gekennzeichnet, daß** die Pumpzelle (10) und das Meßelement (20) räumlich getrennt voneinander angeordnet und über einen Diffusionspalt (31) miteinander verbunden sind, und daß der Diffusionsspalt (31) mit einer Öffnung dem Gasgemisch ausgesetzt ist, wobei der Diffusionsspalt (31) die Diffusionsstrecke bildet und wobei sich im Diffusionsspalt (31) jeweils entgegengesetzt verlaufend der Sauerstoffgradient und der Gradient der zu bestimmenden Gaskomponente aufbaut.

**13.** Sensor nach Anspruch 12, **dadurch gekennzeichnet, daß** am geschlossenen Ende des Difusionsspalts (31) die Pumpzelle (10) mit einer inneren und einer äußeren Pumpelektrode (11, 16) und im Diffusionsspalt (31) das Meßelement (20) angeordnet ist.

**14.** Sonde nach Anspruch 12, **dadurch gekennzeichnet, daß** das Meßelement (20) ein Halbleitergassensor (15) ist,-welcher auf der Großfläche des in den Festelektrolyt (12) eingebrachten Diffusionsspalts (31) angeordnet ist.

**15.** Sensor nach Anspruch 12, **dadurch gekennzeichnet, daß** das Meßelement (20) eine elektrochemische Meßzelle (30) ist, welche auf der Großfläche des in den Festelektrolyt (12) eingebrachten Diffusions-spalts (31) angeordnet ist.

**16.** Sensor nach Anspruch 15, **dadurch gekennzeichnet, daß** die innere Pumpelektrode (16) zugleich eine Referenzelektrode (37) der Meßzelle (30) bildet , und daß auf der Größfläche des Diffusionsspalts (31) eine Meßelektrode (36) angeordnet ist.

**17.** Sensor nach Anspruch 12, **dadurch gekennzeichnet, daß** das Meßelement (20) ein kalorimetrischer Gassensor (40) ist, welcher auf der Großfläche des in den Festelektrolyt (12) eingebrachten Diffusionsspalts (31) angeordnet ist.

**18.** Sensor nach Anspruch 12, **dadurch gekennzeichnet, daß** das Meßelement ein Ionisationsdetektor (50) ist, welcher im Diffusionsspalt (31) derart angeordnet ist, daß sich eine katalytische Anode (51) und eine Kathode (52) gegenüberliegen.

**19.** Sensor nach Anspruche 12, **dadurch gekennzeichnet, daß** die abgasseitige Öffnung des Diffusionsspalts (31) mit einem Oxidationskatalysator (47) verschlossen ist, welcher nur für ausgewählte Gaskomponenten passierbar ist.

**20.** Sensor nach Anspruch 1, **dadurch gekennzeichnet, daß** der Festelektrolyt (23') der Pumpzelle (20') porös ausgeführt ist.

**21.** Sensor nach Anspruch 20, **dadurch gekennzeichnet, daß** mindestens ein Diffusionskanal (19'', 29') für den zu pumpenden Sauerstoff vorgesehen ist, welcher seitlich an den porösen Festelektrolyt (23') herangeführt ist.

**22.** Sensor nach Anspruch 21, **dadurch gekennzeichnet, daß** der Diffusionskanal (19'', 29') mit einem Diffusionskörper (24') verfüllt ist.

**23.** Sensor nach Anspruch 20, **dadurch gekennzeichnet, daß** der poröse Festelektrolyt aus einer Mischkeramik aus stabilisiertem $ZrO_2$ und $Al_2O_3$, vorzugsweise im Verhältnis 1:1 besteht.

**24.** Sensor nach Anspruch 20, **dadurch gekennzeichnet, daß** das Substrat (10') mit mindestens eine Deckschicht (15') versehen ist, in welcher über der Pumpzelle (20') eine Aussparung (17') vorgesehen ist, und daß in der Aussparung (17') das Meßelement angeordnet ist.

**25.** Sensor nach Anspruch 24, **dadurch gekennzeichnet, daß** in der Deckschicht (15') mindestens eine Öffnung (18') vorgesehen ist, welche zu mindestens einem der seitlichen Diffusionskanäle (19', 29') geführt ist.

**26.** Sensor nach Anspruch 25, **dadurch gekennzeichnet, daß** in der Aussparung (17') eine über die Pumpelektrode (22') gelegte poröse Diffusionsschicht (31') vorgesehen ist, über welcher sich das Meßelement befindet, wobei über die poröse Schicht (31') der Sauerstoff von der Pumpzelle zum Meßelement diffundierbar ist.

**27.** Sensor nach einem der vorhergehenden Ansprüche, **dadurch gekennzeichnet, daß** auf dem Meßelement (20) eine poröse Schicht (14) aufgebracht ist, die eine Diffusionsbarriere bildet.

**Claims**

**1.** Sensor for determining gas components and/or gas concentrations in gas mixtures, in particular of CO, $NO_x$ and HC in exhaust gases of internal combustion engines, having a measuring element, which has a sensitive region, having a pump cell with pump electrodes which are arranged on a solid electrolyte and by utilizing the oxygen ion conduction of the solid electrolyte cause a transfer of oxygen to the measuring element, and having a diffusion path for the gas mixture and the oxygen pumped by the pump cell, the gas mixture and the pumped oxygen being led to the sensitive region of the measuring cell via the diffusion path, **characterized in that** the pump cell (10, 20') and the measuring element (20, 30, 30', 40, 50) are arranged separately from one another and connected to one another via the diffusion path, **in that** the diffusion path is exposed to the gas mixture with the aid of an opening, **in that** downstream of the sensitive region of the measuring element (20, 30, 30', 40, 50) at least one of the pump electrodes (16) is arranged opposite the opening in the diffusion direction of the gas components to be determined and in such a way within the diffusion path that there are formed in the diffusion path a concentration gradient of the gas component to be determined and a concentration gradient of the oxygen pumped by the pump cell (10, 20') which run in mutually opposite directions, and **in that** the measuring element (20, 30, 30', 40, 50) is arranged in the diffusion path with respect to the concentration gradients in such a way that an excess of oxygen is present on the sensitive region and the measuring element (20, 30, 30', 40, 50) is located in the region of high sensitivity with respect to the gas component to be determined.

2. Sensor according to Claim 1, **characterized in that** the gas concentration is set in such a way that a change in gas concentration delivers a change in the sensor signal which is substantially greater than the change in the sensor signal caused by the change in oxygen concentration.

3. Sensor according to Claim 1, **characterized in that** the maximum concentration, occurring on the sensitive region, of the gas component to be determined is set approximately to the stoichiometric value with regard to the oxygen concentration and does not, however, exceed said value, with the result that the concentration of the gas component to be determined delivers a maximum sensor signal.

4. Sensor according to Claim 1, **characterized in that** the pump cell (10, 20') has an inner and an outer pump electrode (11, 16, 22', 21'), **in that** the measuring element (20, 30') forms an integrated layer system with the pump cell (10, 20'), and **in that** the diffusion path is formed by at least one porous layer, the gradient of the gas component to be determined and the oxygen gradient building up extending respectively in opposite directions in the porous layer.

5. Sensor according to Claim 4, **characterized in that** a semiconductor gas sensor made from a porous semiconducting metal oxide layer (13) forming the sensitive region is provided as measuring element (20).

6. Sensor according to Claim 4, **characterized in that** there is arranged on the inner pump electrode (16) a porous insulating layer (25) which forms the diffusion path, and **in that** a semiconducting metal oxide layer (13) of a semiconductor gas sensor is arranged on the insulating layer (25).

7. Sensor according to Claim 4, **characterized in that** the measuring element (20) is an electrochemical measuring cell (28) having an $O^{-2}$-conducting solid electrolyte (35) on which a measuring electrode (36) and a reference electrode (37) are arranged, the $O^{-2}$-conducting solid electrolyte (35) being constructed in a porous fashion and forming the diffusion path.

8. Sensor according to Claim 4, **characterized in that** the measuring element (20) is a calorimetric sensor which is arranged on the solid electrolyte carrier (12), **in that** at least two resistors (41, 42) are provided, **in that** one of the resistors (41) is embedded in a catalytically active layer (43), with the result that the temperature of this resistor varies, and **in that** the other resistor (42) is assigned to a catalytically inactive layer (44).

9. Sensor according to Claim 8, **characterized in that** the catalytically active layer (43) is embodied in a porous fashion and forms the diffusion path.

10. Sensor according to Claim 8, **characterized in that** there is arranged on the inner pump electrode (16) a porous insulating layer (45) which forms the diffusion path.

11. Sensor according to Claim 4, **characterized in that** the measuring element (20) is an ionization detector (50) having a catalytically active anode (51) arranged in an ionization chamber (55) and a cathode (52), it being the case that at relatively high temperatures the anode (51) forms positive ions which the cathode (52) extracts by means of an extraction voltage, and **in that** the ionization chamber (55) forms the diffusion path.

12. Sensor according to Claim 1, **characterized in that** the pump cell (10) and the measuring element (20) are arranged spatially separated from one another and are interconnected via a diffusion gap (31), and **in that** the diffusion gap (31) is exposed to the gas mixture by means of an opening, the diffusion gap (31) forming the diffusion path, and the oxygen gradient and the gradient of the gas component to be determined building up extending respectively in opposite directions in the diffusion gap (31).

13. Sensor according to Claim 12, **characterized in that** the pump cell (10) having an inner and an outer pump electrode (11, 16) is arranged at the closed end of the diffusion gap (31), and the measuring element (20) is arranged in the diffusion gap (31).

14. Sensor according to Claim 12, **characterized in that** the measuring element (20) is a semiconductor gas sensor (15) which is arranged on the large face of the diffusion gap (31) introduced into the solid electrolyte (12).

15. Sensor according to Claim 12, **characterized in that** the measuring element (20) is an electrochemical measuring cell (30) which is arranged on the large face of the diffusion gap (31) introduced into the solid electrolyte (12).

16. Sensor according to Claim 15, **characterized in that** the inner pump electrode (16) simultaneously forms a reference electrode (37) of the measuring cell (30), and **in that** a measuring electrode (36) is arranged on the large face of the diffusion gap (31).

17. Sensor according to Claim 12, **characterized in that** the measuring element (20) is a calorimetric gas sensor (40), which is arranged on the large face of the diffusion gap (31) introduced into the solid electrolyte (12).

18. Sensor according to Claim 12, **characterized in that** the measuring element is an ionization detector (50) which is arranged in the diffusion gap (31) in such a way that a catalytic anode (51) and a cathode (52) are situated opposite one another.

19. Sensor according to Claim 12, **characterized in that** the opening, on the exhaust-gas side, of the diffusion gap (31) is sealed by means of an oxidation catalyst (47) which is permeable only to selected gas components.

20. Sensor according to Claim 1, **characterized in that** the solid electrolyte (23') of the pump cell (20') is constructed in a porous fashion.

21. Sensor according to Claim 20, **characterized in that** there is provided for the oxygen to be pumped at least one diffusion channel (19'', 29') which is led up laterally to the porous solid electrolyte (23').

22. Sensor according to Claim 21, **characterized in that** the diffusion channel (19'', 29') is filled with a diffusion body (24').

23. Sensor according to Claim 20, **characterized in that** the porous solid electrolyte consists of a mixed ceramic made from stabilized $ZrO_2$ and $Al_2O_3$, preferably in the ratio of 1:1.

24. Sensor according to Claim 20, **characterized in that** the substrate (10') is provided with at least one cover layer (15') in which a cutout (17') is provided over the pump cell (20'), and **in that** the measuring element is arranged in the cutout (17').

25. Sensor according to Claim 24, **characterized in that** there is provided in the cover layer (15') at least one opening (18') which is led to at least one of the lateral diffusion channels (19', 29').

26. Sensor according to Claim 25, **characterized in that** there is provided in the cutout (17') a porous diffusion layer (31') which is laid over the pump electrode (22') and over which the measuring element is located, it being possible for the oxygen to diffuse from the pump cell to the measuring element via the porous layer (31').

27. Sensor according to one of the preceding claims, **characterized in that** a porous layer (14) which forms a diffusion barrier is applied to the measuring element (20).

## Revendications

1. Capteur pour déterminer les composants gazeux et/ou les concentrations de gaz dans des mélanges gazeux, notamment CO, $NO_x$ et HC dans les gaz d'échappement de moteurs à combustion interne, comprenant un élément de mesure ayant une zone sensible, une cellule de pompage avec des électrodes de pompage prévues sur un électrolyte solide et qui en utilisant la conduction de l'oxygène ionique de l'électrolyte solide produisent un transfert d'oxygène vers l'élément de mesure, ainsi qu'un chemin de diffusion pour le mélange gazeux et l'oxygène pompé par la cellule de pompage, le mélange gazeux et l'oxygène pompé étant conduits vers la zone sensible de la cellule de mesure par le chemin de diffusion,
   **caractérisé en ce que**

   • la cellule de pompage (10, 20') et l'élément de mesure (20, 30, 30', 40, 50) sont prévus séparément l'un de l'autre et sont reliés par le chemin de diffusion,
   • le chemin de diffusion est exposé au mélange gazeux par l'intermédiaire d'un orifice,
   • au moins l'une des électrodes de pompage (16), à l'opposé de l'ouverture, se trouve dans le sens de diffusion des composants gazeux à définir, derrière la zone sensible de l'élément de mesure (20, 30, 30', 40, 50) de façon à être dans le chemin de diffusion,
   • dans le chemin de diffusion il s'établit un gradient de concentration des composants gazeux à définir et un gradient de concentration de l'oxygène pompé par la cellule de pompage (10, 20), ces gradients étant dirigés de façon opposée l'un à l'autre, et

- l'élément de mesure (20, 30, 30', 40, 50) est disposé dans le chemin de diffusion, par rapport aux gradients de concentration de façon que dans la zone sensible il y ait un excédent d'oxygène et que l'élément de mesure (20, 30, 30', 40, 50) se trouve dans la zone de plus grande sensibilité par rapport aux composants gazeux à définir.

**2.** Capteur selon la revendication 1, **caractérisé en ce que**
la concentration en gaz est réglée pour qu'une variation de la concentration en gaz donne une variation du signal du capteur qui est considérablement plus grande que la variation du signal de capteur produite par une variation de concentration d'oxygène.

**3.** Capteur selon la revendication 1, **caractérisé en ce que**
la concentration maximale produite dans la zone sensible pour les composants gazeux à déterminer est réglée sur la valeur stoechiométrique pour la concentration en oxygène sans toutefois dépasser celle-ci pour que la concentration des composants gazeux à définir fournisse un signal de capteur maximum.

**4.** Capteur selon la revendication 1, **caractérisé en ce que**

la cellule de pompage (10, 20') possède une électrode de pompage intérieure et une électrode de pompage extérieure (11, 16, 22', 21'), l'élément de mesure (20, 30') forme un système de couche intégrée avec la cellule de pompage (10, 20') ,et
le chemin de diffusion est formé par au moins une couche poreuse, dans laquelle le gradient des composants gazeux à déterminer et le gradient d'oxygène sont chaque fois dirigés de façon opposée.

**5.** Capteur selon la revendication 4, **caractérisé en ce que**
l'élément de mesure (20) est un capteur de gaz à semi-conducteur formé d'une couche d'oxyde métallique (13) semiconductrice, poreuse, formant la zone sensible.

**6.** Capteur selon la revendication 4, **caractérisé en ce que**

- sur l'électrode de pompage intérieure (16) on applique une couche d'isolation poreuse (25) constituant le chemin de diffusion, et
- sur la couche d'isolation (25) on applique une couche d'oxyde métallique semi-conducteur (13) d'un capteur à gaz à semi-conducteur.

**7.** Capteur selon la revendication 4, **caractérisé en ce que**
l'élément de mesure (20) est une cellule de mesure électrochimique (28) avec un electrolyte solide (35) à conduction d'ions oxygène $O^{-2}$, sur lequel est prévue une électrode de mesure (36) et une électrode de référence (37), l'electrolyte solide (35) conducteur d'ions oxygène $O^{-2}$ étant poreux et formant le chemin de diffusion.

**8.** Capteur selon la revendication 4, **caractérisé en ce que**

- l'élément de mesure (20) est un capteur calorimétrique prévu sur le support d'electrolyte solide (12),
- au moins deux chemins résistants (41, 42) sont prévus
- l'un des chemins résistants (41) est intégré dans une couche (43) catalytiquement active pour que la température de cette résistance change, et
- l'autre résistance (42) correspond à une couche catalytiquement inactive (44).

**9.** Capteur selon la revendication 8, **caractérisé en ce que**
la couche catalytiquement active (43) est poreuse et forme le chemin de diffusion.

**10.** Capteur selon la revendication 8, **caractérisé en ce que**
sur l'électrode de pompage intérieure (16) on a une couche d'isolation poreuse (45) formant le chemin de diffusion.

**11.** Capteur selon la revendication 4, **caractérisé en ce que**

- l'élément de mesure (20) est un détecteur d'ionisation (50) ayant une électrode catalytiquement active (51) prévue dans une chambre d'ionisation (55) ainsi qu'une cathode (52), l'anode (51) formant aux températures élevées des ions positifs absorbés par la cathode (52) à l'aide d'une tension d'absorption, et
- la chambre d'ionisation (55) forme le chemin de diffusion.

**12.** Capteur selon la revendication 1, **caractérisé en ce que**

- la cellule de pompage (10) et l'élément de mesure (20) sont séparés dans l'espace et sont reliés par un intervalle de diffusion (31), et

- l'intervalle de diffusion (31) est exposé par son ouverture au mélange gazeux, l'intervalle de diffusion (31) formant le chemin de diffusion, et
- dans l'intervalle de diffusion (31) on a chaque fois, avec des tracés opposés, le gradient d'oxygène et le gradient des composants gazeux à définir.

**13.** Capteur selon la revendication 12,
**caractérisé en ce qu'**
à l'extrémité fermée de l'intervalle de diffusion (31) se trouve la cellule de pompage (10) avec une électrode de pompage intérieure et une électrode pompage extérieure (11, 16) et l'élément de mesure (20) est prévu dans l'intervalle de diffusion (31).

**14.** Capteur selon la revendication 12,
**caractérisé en ce que**
l'élément de mesure (20) est un capteur de gaz semi-conducteur (15) prévu sur la grande surface de l'intervalle de diffusion (31) réalisé dans l'électrolyte solide (12).

**15.** Capteur selon la revendication 12,
**caractérisé en ce que**
l'élément de mesure (20) est une cellule de mesure électrochimique (30) prévue sur la grande surface de l'intervalle de diffusion (31) réalisé dans l'électrolyte solide (12).

**16.** Capteur selon la revendication 15,
**caractérisé en ce que**

l'électrode de pompage intérieure (16) constitue en même temps l'électrode de référence (37) de la cellule de mesure (30), et
sur la grande surface de l'intervalle de diffusion (31) on a une électrode de mesure (36).

**17.** Capteur selon la revendication 12,
**caractérisé en ce que**
l'élément de mesure (20) est un capteur de gaz calorimétrique (40) prévu sur la grande surface de l'intervalle de diffusion (31) réalisé dans l'électrolyte solide (12).

**18.** Capteur selon la revendication 12,
**caractérisé en ce que**
l'élément de mesure est un détecteur d'ionisation (50) disposé dans l'intervalle de diffusion (31), pour avoir une anode catalytique (51) et une cathode (52) opposées.

**19.** Capteur selon la revendication 12,
**caractérisé en ce que**
l'ouverture de l'intervalle de diffusion (31) du côté de la sortie du gaz est fermée par un catalyseur d'oxydation (47) perméable aux composants gazeux sélectionnés.

**20.** Capteur selon la revendication 1,
**caractérisé en ce que**
l'électrolyte solide (23') de la cellule de pompage (20') est poreuse.

**21.** Capteur selon la revendication 20,
**caractérisé en ce qu'**
au moins un canal de diffusion (19", 29') est prévu pour amener l'oxygène à pomper latéralement sur l'électrolyte solide poreux (23').

**22.** Capteur selon la revendication 21,
**caractérisé en ce que**
le canal de diffusion (19", 29') est rempli d'un corps de diffusion (24').

**23.** Capteur selon la revendication 20,
**caractérisé en ce que**
l'électrolyte solide poreux est formé d'un mélange de céramique de $ZrO_2$ stabilisé et de $Al_2O_3$, de préférence selon le rapport 1/1.

**24.** Capteur selon la revendication 20,
**caractérisé en ce que**
le substrat (10') est muni d'au moins une couche de recouvrement (15') dans laquelle est prévue une cavité (17') au-dessus de la cellule de pompage (20'), et l'élément de mesure est logé dans la cavité (17').

**25.** Capteur selon la revendication 24,
**caractérisé en ce que**
la couche de recouvrement (15') comporte au moins une ouverture (18') qui arrive à au moins l'un des canaux de diffusion latéraux (19', 29').

**26.** Capteur selon la revendication 25,
**caractérisé par**
une couche de diffusion (31') poreuse placée dans la cavité (17') au-dessus de l'électrode de pompage (22') et au-dessus de laquelle se trouve l'élément de mesure, l'oxygène de la cellule de pompage pouvant diffuser vers l'élément de mesure par la couche poreuse (31').

**27.** Capteur selon l'une quelconque des revendications précédentes,
**caractérisé par**
une couche poreuse (14) appliquée sur l'élément de mesure (20) et qui constitue une barrière de diffusion.

Fig. 1b

Fig. 1a

Fig. 1c

Fig. 2a

Fig. 2b

Fig. 2c

Fig. 2d

Fig. 2e

Fig. 3a

15     10   11
   12
31
   32
   16
18   13   19

Fig. 3b

$x_{CO}$

$x_{CO(o)}$

$x_{CO(S)}$

$x_{O_2(o)}$

$x_{O_2}$

$x_{O_2(l)} \gg x_{O_2(o)}$

$x_{O_2(S)}$

0       S     l

Fig. 4a

14   36      38
30 {
   35
10 {
16, 37    12
11
$U_p$

Fig. 4b

30    10   11
31    16, 37
   12
36

Fig. 5a

43 — 41
44 — 42

Fig. 5b

48   16,41   43   49
40 {
10 {
11   12

Fig. 5c

48   41   43   16   49   45
40 {
10 {
11   12

Fig. 5d

47   31   10   11   16
12
29

Fig. 5e

$X_{HC}$
$X_{HC}$
$X_{O_2}$
$X_{O_2}$
$CO/H_2$
$X_{CO}$
$X_{H_2}$
S'   S''

Fig. 6a

Fig. 6b

Fig. 7a

Fig. 7b

Fig. 7c